# EUROPEAN PATENT APPLICATION

(11) **EP 2 107 400 A2**
(43) Date of publication of application: **07.10.2009**
(21) Application number: 09155529.2
(22) Date of filing: 18.03.2009
(51) Int. Cl.: G02B 6/00, F21V 8/00

(54) **LED backlight assembly with uniform brightness**

(30) Priority: 03.04.2008 US 80755
(71) Applicant: TPO Displays Corp., Miao-Li County (TW)
(72) Inventor: Toussaint, Serge Leon Gerard, 6419 SC Heerlen (NL); van de Wal, Eric, 6367 BT Voerendaal (NL)
(74) Representative: Epping - Hermann - Fischer

(57) **Abstract**

The present invention discloses a system for displaying images, comprising: a light source; a panel including an active area and a peripheral area; a light guide being located at one side of the light source and under the panel, the light guide having a first side facing the panel and a second side opposite to the first side; and a plurality of optical foils, each foil disposed on the first or second side of the light guide, wherein at least one of the optical foil has a hotspot-reducing area in the peripheral area in order to reduce or eliminate a hotspot in front of the light source, wherein the hotspot-reducing area is a cut-out area, a covered area, or combinations thereof.

## Description

### BACKGROUND

### Field of Invention

The present invention relates to an electronic device, a light system, and a system for displaying images, and in particular to an electronic device, a light system, and a system for displaying images, comprising an optical foil having a hotspot-reducing area in order to reduce or eliminate a hotspot of the system.

### Description of the Related Art

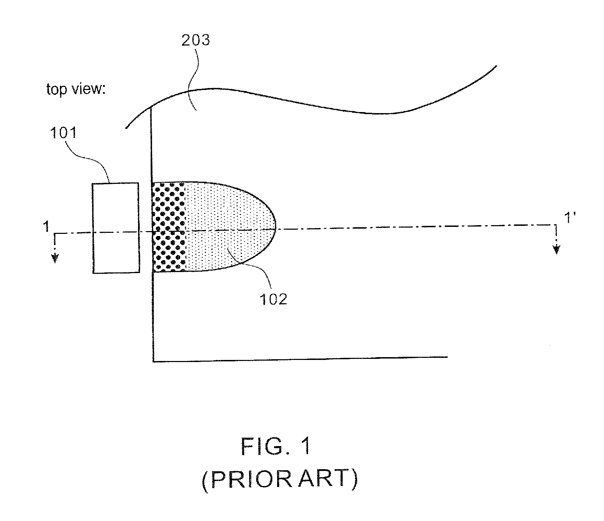

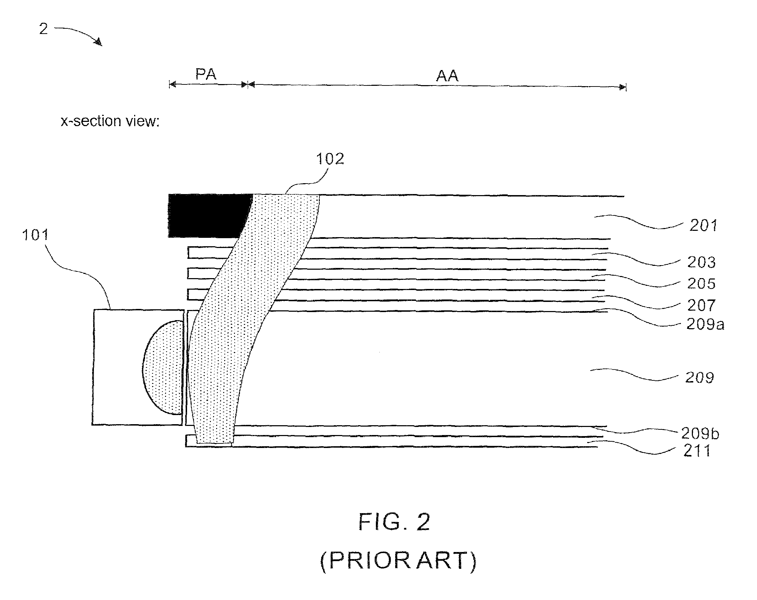

FIG. 1 is a schematic top view of a conventional system 2 for displaying images. FIG. 2 shows the cross-sectional view of FIG. 1, taken along section line 1-1'. The conventional system 2 comprises a light source 101, a panel 201 including an active area AA and a peripheral area PA, prisms 203 and 205, a diffuser 207, a light guide 209, and a reflector 211. In the system 2 of FIG. 1, a hotspot 102 may be usually generated when the light source 101 is activated. The light source 101 can be a LED. Otherwise, in FIG. 1, the prism 203 only presents exemplary one of the foils. The light guide 209 is located at one side of the light source 101 and under the panel 201. The prisms 203 and 205 and the diffuser 207 are located on the first side 209a of the light guide 209. The reflector 211 is located on the second side 209b of the light guide 209. Light emitted from the light source 101 may pass through the light guide 209, diffuser 207, prisms 205 and 203, and to the panel 201 or pass through the light guide 209 to the reflector 211, be reflected by the reflector 211, and then pass through the light guide 209, the diffuser 207, prisms 205 and 203, and to the panel 201 for luminescence.

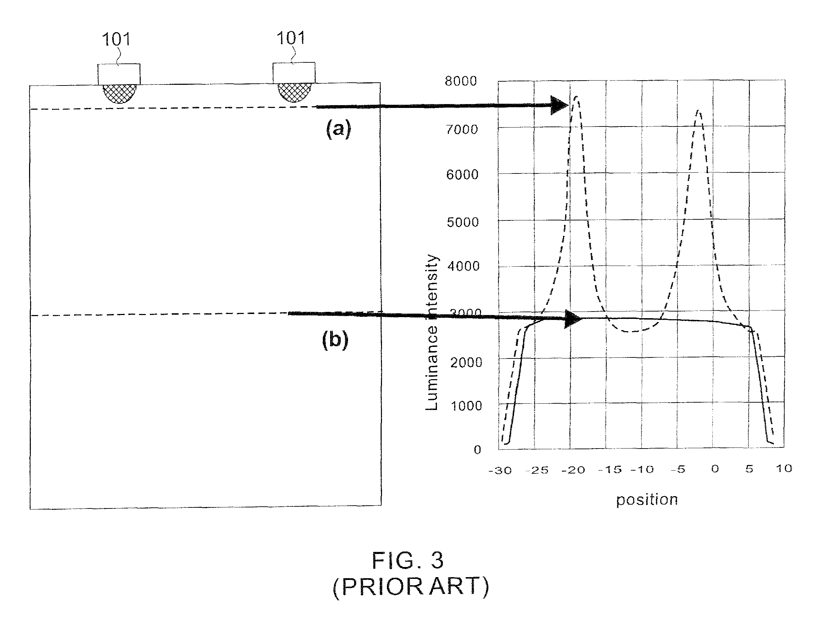

In order to obtain a light module with small length, the light source to active area distance is preferably made as small as possible. This may lead to hot spots seen by customers within the active area AA of the panel 201. FIG. 3 illustrates the luminance intensity of the system shown in FIG. 2, showing the hotspot phenomenon in position (a) near one light source 101.

### SUMMARY

One objective of the present invention is to provide a system for reducing or eliminating a hotspot and therefore improve homogeneity.

In view of the drawbacks of the prior arts, the present invention discloses a system for displaying images, comprising: a light source; a panel including an active area and a peripheral area; a light guide being located at one side of the light source and under the panel, the light guide having a first side facing the panel and a second side opposite to the first side; and a plurality of optical foils, each foil disposed on the first or second side of the light guide, wherein at least one of the optical foil has a hotspot-reducing area in the peripheral area in order to reduce or eliminate a hotspot in front of the light source, wherein the hotspot-reducing area is a cut-out area, a covered area, or combinations thereof.

The present invention further discloses a light system, comprising: a light source; a light guide being located at one side of the light source, the light guide having a first side and a second side opposite to the first side; and a plurality of optical foils, each foil disposed on the first or second side of the light guide, wherein at least one of the optical foil has a hotspot-reducing area in the peripheral area in order to reduce or eliminate a hotspot in front of the light source, wherein the hotspot-reducing area is a cut-out area, a covered area, or combinations thereof.

It is understood that both the foregoing general description and the following detailed explanation are provided as examples only, and should not be considered to limit the scope of the present invention.

### BRIEF DESCRIPTION OF THE DRAWINGS

The features and advantages of the present invention will become better understood with regard to the following description, appended claims, and accompanying drawings where:

FIG. 1 is a schematic top view of a conventional system for displaying images;

FIG. 2 shows the cross-sectional view of FIG. 1, taken along section line 1-1';

FIG. 3 depicts the normalized luminance intensity of the system shown in FIG. 1;

FIG. 4 is a schematic top view of a system for displaying images according to an embodiment of the present invention;

FIG. 5 is a cross-sectional view of FIG. 4, taken along section line 4-4';

FIG. 6 is an exemplary test matrix table of another embodiment of the present invention;

FIG. 7 is an exemplary luminance diagram according to the test matrix of FIG. 6;

FIG. 8 illustrates a normalized luminance intensity measured at two different locations in the configuration nr14 (CCCC) depicted in FIG. 6 and FIG. 7;

FIG. 9 is a schematic view illustrating a comparison between a first embodiment having optical foils fully extended up to the light sources and a second embodiment having optical foils provided with cut-outs;

FIG. 10 is a graph plotting the luminance level measured along line 'A' in FIG. 9 respectively for the first embodiment without hotspot-reducing areas in the optical foils and the second embodiment with hotspot-reducing areas in the optical foils;

FIG. 11 is a graph plotting the luminance level measured along line 'B' in FIG. 9 respectively for the first embodiment without hotspot-reducing areas in the optical foils and the second embodiment with hotspot-reducing areas in the optical foils; and

FIG. 12 is a schematic diagram of an electronic device implementation including the system shown in FIG. 5.

### DESCRIPTION OF THE PREFERRED EMBODIMENTS

Reference will now be made in detail to the preferred embodiments of the present invention, examples of which are illustrated in the accompanying drawings. Wherever possible, the same reference numbers are used in the drawings and the description to refer to the same or like parts.

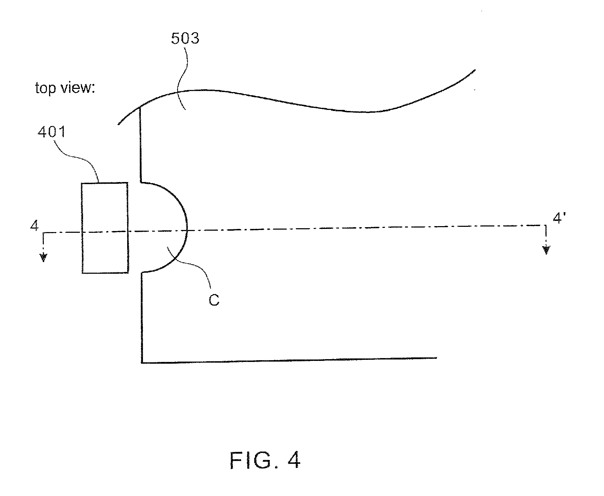

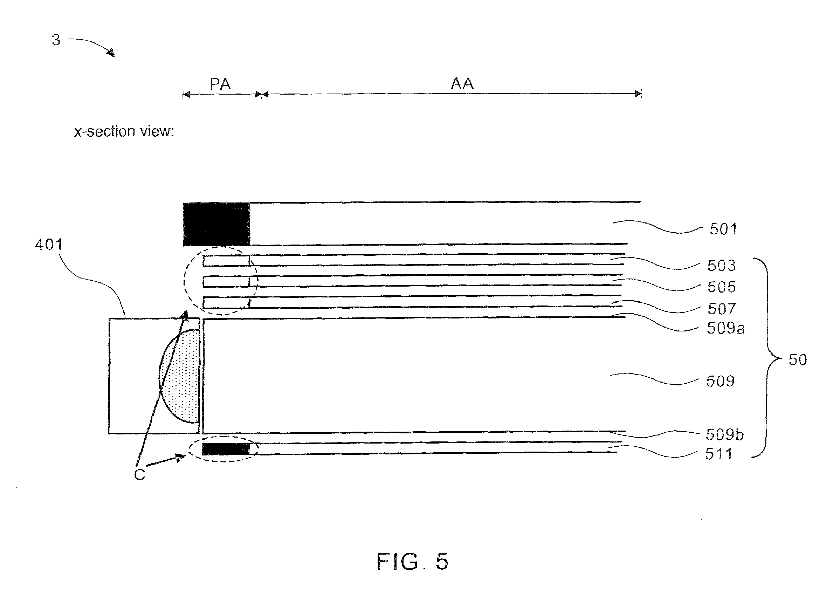

FIG. 4 is a schematic top view of a system 3 for displaying images according to an embodiment of the present invention. FIG. 5 is a cross-sectional view of FIG. 4, taken along section line 4-4'. As shown in FIG. 5, the system 3 comprises a panel 501 including an active area AA and a peripheral area PA, and a light system 50 located under the panel 501. The light system 50 comprises a light source 401, a light guide 509, and a plurality of optical foils. The light guide 509 is located at one side of the light source 401 and under the panel 501. The light guide 509 has a first side 509a facing the panel 501 and a second side 509b opposite to the first side 509a. Each of the plurality of optical foils can be disposed on the first side 509a or the second side 509b of the light guide 509. In this embodiment, the optical foils can include upper and lower prisms 503 and 505, a diffuser 507, and a reflector 511. The upper and lower prisms 503 and 505 and the diffuser 507 are disposed on the first side 509a, and the reflector 511 on the second side 509b of the light guide 509. The light source 401 can be a LED. Prisms 503 and 505, and the diffuser 507 can be transparent foils. The reflector 511 can be a reflective foil.

The feature of the present invention resides in that at least one of the optical foil has a hotspot-reducing area in the peripheral area PA of the panel 501. Referring to FIG. 5, in this embodiment, all of the prisms 503 and 505, the diffuser 507, and the reflector 511 include a hotspot-reducing area C in the peripheral area PA of the panel 501 in order to reduce or eliminate a hotspot (not shown) in front of the light source 401. The hotspot-reducing area C can be in the proximity of the light source 401. The hotspot-reducing area C can be rectangular, half-circular, or any other shape. The hotspot-reducing area can be a cut-out area, a covered area, or combinations thereof. The covered area can be a darken area, a blacken area, a masked area, or combinations thereof.

In FIG. 5, prisms 503 and 505 and the diffuser 507 have cut-out areas. The reflector 511 has a covered area. However, the present invention is not limited to this structure. Those skilled in the art should understand that any of the prisms 503 and 505, the diffuser 507 and reflector 511 may have hotspot-reducing areas formed of cut-out or covered areas according to design requirements.

The hotspot-reducing area can be arranged in one or all of the optical foils. The effect of the hotspot-reducing area in the different sets described above is not necessary the same. Those skilled in the art should understand that the optical foils with the hotspot-reducing area are not limited to what the embodiments described in this specification. The choice of the hotspot-reducing area in different optical foils is determined by the designer according to his/her need.

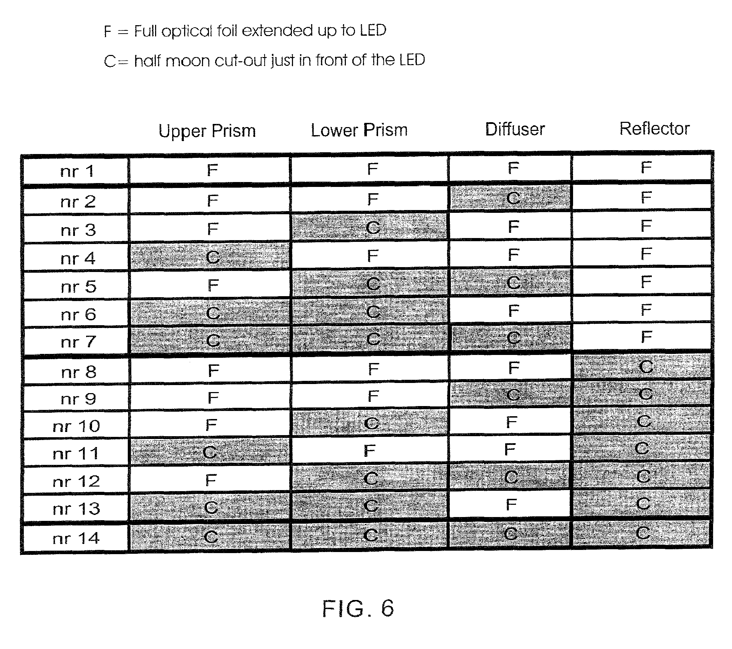

FIG. 6 is an exemplary test matrix table of another embodiment of the present invention. In order to evaluate the effectiveness of the cut-out area provided in front of the LED in each optical foil, the test matrix of FIG. 6 illustrates different combinations of placement of the cut-outs in the optical foils that may be tested. The optical foils exemplary comprises four layers, i.e., an upper prism foil, a lower prism foil, a diffuser foil and a reflector foil. A total of fourteen combinations nr1∼nr14, corresponding to the various placements of the cut-outs in different optical foils in front of the LEDs, are thus tested.

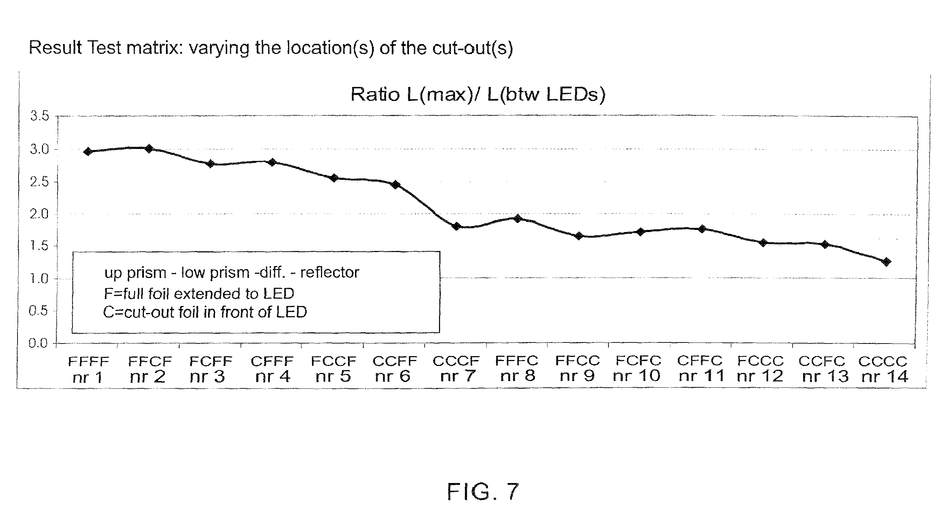

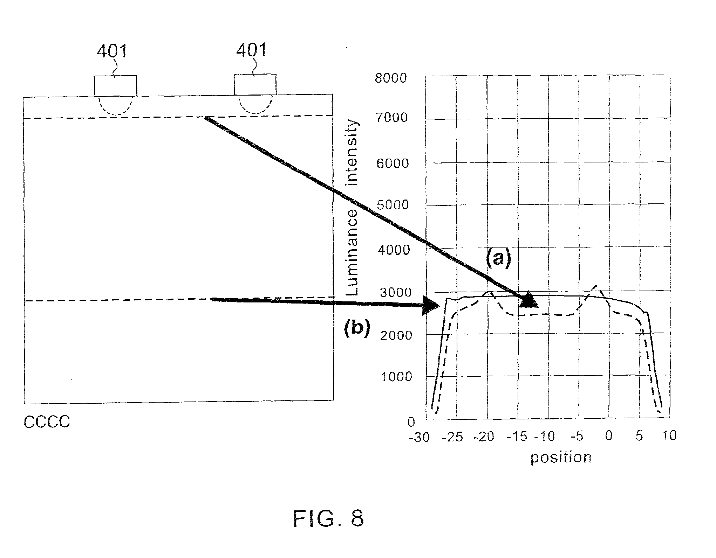

FIG. 7 is a graph plotting the luminance measured for the different combinations of placement of the cut-outs set forth in the test matrix table of FIG. 6. For each combination, FIG. 7 illustrates the maximum luminance intensity normalized to the luminance level obtained between the LEDs. FIG. 8 illustrates the normalized luminance intensity obtained for the configuration nr14 (CCCC) illustrated in FIG. 6 and FIG. 7.

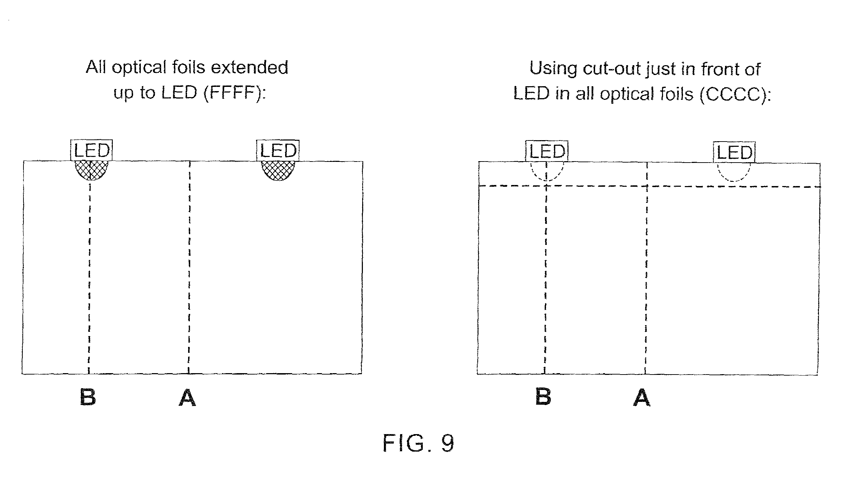

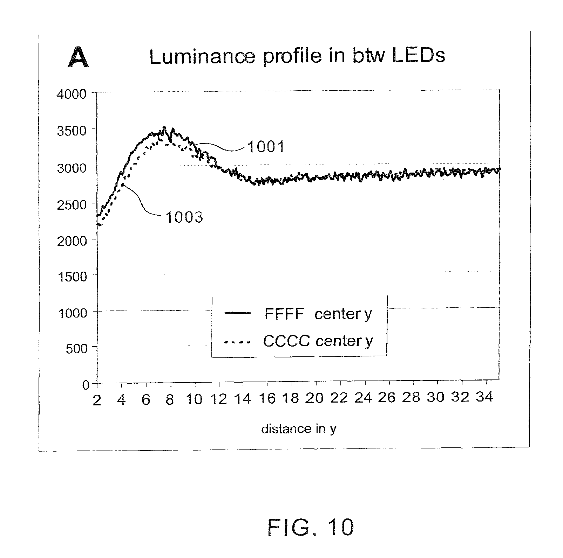

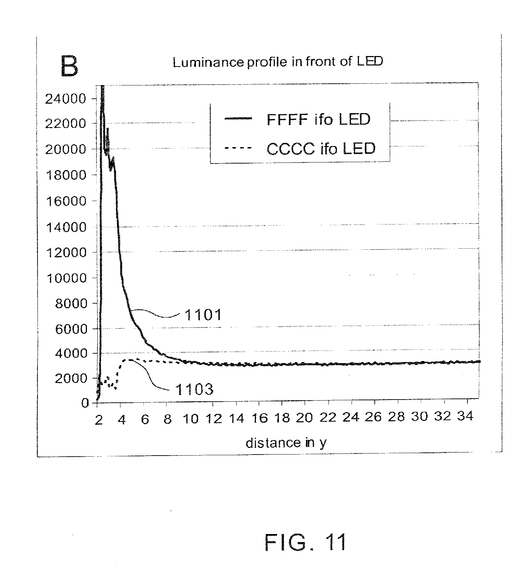

FIG. 9 illustrates a comparison between two embodiments provided with a backlight that features two LEDs and four optical foils (diffuser, lower and upper prism and reflector). More specifically, the embodiment represented on the left side has optical foils fully extended up to the LEDs, corresponding to the test configuration nr1 (FFFF) shown in FIG. 6. The embodiment represented on the right side is similar to that on the left side, except that the one on the right side includes hotspot-reducing areas formed of half disc cut-outs in all the optical foils, which corresponds to the test configuration nr14 (CCCC) shown in FIG. 6. As illustrated, the hotspots are significantly reduced or even eliminated for the embodiment with hotspot-reducing areas. To evaluate the results provided by the cut-outs in the configuration nr14 (CCCC), the horizontal dotted line in FIG. 9 indicate positions just in front of the LEDs along which luminance measurement is taken (as illustrated by curve (a) in FIG. 8). The vertical dotted lines A and B in FIG. 9 indicate the positions where luminance is measured in a direction perpendicular to the horizontal direction, which is represented by the curves shown in the graphs of FIG. 10 and FIG. 11.

As illustrated in the left picture of FIG. 9, bright hotspots are visible in the area just in front of the LEDs. In contrast, the right picture of FIG. 9 shows the embodiment in which hotspot-reducing areas are provided in all of the optical foils. For this embodiment, the luminance intensity can be measured along a horizontal axis in front of the LEDs. In this regard, FIG. 8 describes the normalized luminance intensity (i.e., normalized to the luminance level in between the LEDs) measured along the horizontal x-axis in front of the LEDs (but just outside the area where the hotspot-reducing area is positioned) for the configuration nr14 (CCCC). This should be compared to the diagram in FIG. 2, showing the same situation as in FIG. 8, but without any hotspot-reducing areas in the optical foils. As shown, the level of luminance at the locations in front of the LEDs is considerably reduced when cut-out areas are provided in the optical foils. Hotspot effects thus are substantially reduced.

FIG. 10 and FIG. 11 are additional measurement graphs showing the effectiveness of the hotspot-reducing area. Curves 1001, 1003, 1101, and 1103 illustrate the change of luminance measured along the lines 'A' and 'B' depicted in FIG. 9 for embodiments with hotspot-reducing areas (CCCC) and without hotspot-reducing areas (FFFF).

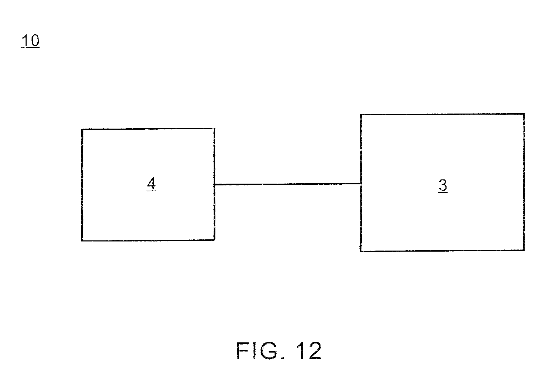

Referring to FIG. 12, an electronic device 10 comprising the system 3 and an input unit 4 is shown. The input unit 4 is coupled to the system 3 and is operative to provide input to the system 3 for displaying images. The electronic device 10 can be a mobile phone, digital camera, PDA (personal digital assistant), notebook computer, desktop computer, television, GPS (global positioning system), car display, aviation display, digital photo frame or portable DVD player.

In summary, the present invention not only reduces or eliminates direct hotspot visibility but also improves homogeneity by introducing hotspot-reducing area in the optical foils.

It will be apparent to those skilled in the art that various modifications or variations can be made to the structure of the present invention without departing from the scope or spirit of the invention. In view of the foregoing, it is intended that the present invention covers all such modifications and variations, which should be interpreted to fall within the scope of the following claims and their equivalents.

## Claims

1. A system for displaying images, comprising:
a light source;
a panel including an active area and a peripheral area;
a light guide being located at one side of the light source and under the panel, the light guide having a first side facing the panel and a second side opposite to the first side; and
a plurality of optical foils, each foil disposed on the first or second side of the light guide, wherein at least one of the optical foil has a hotspot-reducing area in the peripheral area in order to reduce or eliminate a hotspot in front of the light source, wherein the hotspot-reducing area is a cut-out area, a covered area, or combinations thereof.

2. The system of claim 1, wherein the hotspot-reducing area is in the proximity of the light source.

3. The system of claim 1, wherein the light source is an LED.

4. The system of claim 1, wherein the hotspot-reducing area is rectangular, half-circular, or of any other shape.

5. The system of claim 1, wherein the hotspot-reducing area is a covered area, wherein the covered area is a darkened area, a blackened area, a masked area, or combinations thereof.

6. The system of claim 1, wherein the optical foil with the hotspot-reducing area is a transparent foil or a reflective foil.

7. The system of claim 1, wherein the plurality of optical foils comprise a prism and a diffuser disposed on the first side of the light guide, wherein at least one of the prism and diffuser includes the hotspot-reducing area.

8. The system of claim 1, wherein the plurality of optical foils comprise a prism and a diffuser disposed on the first side of the light guide, and a reflector disposed on the second side of the light guide, wherein at least one of the prism, diffuser, and reflector includes the hotspot-reducing area.

9. An electronic device, comprising:
the system of claim 1; and
an input unit operatively coupled to the system to provide input to the system for displaying images.

10. The electronic device of claim 9, wherein the electronic device is a mobile phone, digital camera, PDA (personal digital assistant), notebook computer, desktop computer, television, GPS (global positioning system), car display, aviation display, digital photo frame or portable DVD player.
